# DEMANDE DE BREVET EUROPEEN

(11) **EP 3 626 625 A1**
(43) Date de publication de la demande: **25.03.2020**
(21) Numéro de dépôt: 19196228.1
(22) Date de dépôt: 09.09.2019
(51) Int. Cl.: B64D 29/06, E05C 19/14, E05B 63/14, E05B 53/00

(54) **NACELLE D'AERONEF COMPORTANT UN SYSTEME DE VERROUILLAGE D'UN CAPOT**

(30) Priorité: 12.09.2018 FR 1858163
(71) Demandeur: AIRBUS OPERATIONS, 31060 Toulouse Cedex 9 (FR)
(72) Inventeur: GACHES, Thierry, 31620 CASTELNAU D'ESTRETEFONDS (FR); KALETA, Mathieu, 31200 TOULOUSE (FR); GOUGEON, Pascal, 31620 BOULOC (FR); CZAPLA, Lionel, 31700 CORNEBARRIEU (FR); PIARD, Frédéric, 31170 TOURNEFEUILLE (FR); SABATHIER, Bastian, 31470 FONSORBES (FR); SILLIERES, Lionel, 32130 SAMATAN (FR)
(74) Mandataire: Cabinet Le Guen Maillet

(57) **Abrégé**

L'invention concerne un système de verrouillage (200) d'un capot (152) sur une structure fixe (154) où le système de verrouillage (200) comporte une première partie (202) et une deuxième partie (204), où la première partie (202) comporte un premier crochet (206) mobile en translation sur le capot (152) et un premier fût (208) fixé sur la structure fixe (154) où le premier crochet (206) est mobile entre alternativement une position verrouillée et une position déverrouillée, où la deuxième partie (204) comporte une poignée (214) articulée sur le capot (152) et actionnable entre une position fermée et une position ouverte, un deuxième crochet (210) articulé sur la poignée (214) et un deuxième fût (212) fixé sur la structure fixe (154) ou sur un autre capot symétrique dudit capot (152), où le deuxième crochet (210) est mobile entre alternativement une position verrouillée et une position déverrouillée et où le deuxième crochet (210) est monté sur la poignée (214) de manière à ce que le passage de la position fermée à la position ouverte de la poignée (214) entraîne le passage de la position verrouillée à la position déverrouillée du deuxième crochet (210) et inversement, et où le système de verrouillage (200) comporte également un système de transmission (220) qui est configuré pour déplacer le premier crochet (206) de la position verrouillée à la position déverrouillée lorsque la poignée (214) passe de la position fermée à la position ouverte et inversement.

## Description

### DOMAINE TECHNIQUE

La présente invention concerne une nacelle d'un aéronef comportant un système de verrouillage d'un capot, ainsi qu'un aéronef comportant une telle nacelle.

### ETAT DE LA TECHNIQUE ANTERIEURE

Une nacelle entoure le moteur d'aéronef et comporte des capots qui forment une surface aérodynamique. Lors des opérations de maintenance, il est nécessaire d'ouvrir ou de démonter les capots pour permettre à un technicien d'intervenir sur les éléments qui sont sous les capots.

Chaque capot est monté articulé sur plusieurs charnières disposées en partie haute et est verrouillé par une serrure en partie basse. Chaque charnière consiste en une articulation en col de cygne qui permet un dégagement du capot lors de son ouverture et facilite ensuite l'intervention du technicien.

Il y a en général plusieurs cols de cygne répartis sur la longueur du capot afin de reprendre les charges de fonctionnement du capot.

L'encombrement et la masse résultante de ces cols de cygne dépendent de la distance entre la forme extérieure du capot et l'axe de rotation de celui-ci. Plus cette distance est grande, plus le col de cygne est volumineux et lourd. Sur les capots à plus de deux cols de cygne, avec un concept classique d'articulation, il faut aligner les cols de cygne, amenant à éloigner l'axe d'articulation de la forme extérieure du capot sur un ou plusieurs cols de cygne. Dans ce cas, l'encombrement des cols de cygne, éloignés de la forme extérieure du capot, augmente au détriment de la masse et des autres composants.

### EXPOSE DE L'INVENTION

Un objet de la présente invention est de proposer une nacelle d'aéronef comportant un système de verrouillage qui permet de s'affranchir d'un certain nombre de cols de cygne permettant de garder les cols de cygne aux endroits où ils sont le plus près de la forme aérodynamique, ainsi améliorer l'encombrement et la masse embarquée.

A cet effet, est proposée une nacelle d'un moteur d'aéronef comportant une structure fixe, un capot monté articulé sur la structure fixe et un système de verrouillage du capot sur la structure fixe où le système de verrouillage comporte une première partie et une deuxième partie, où
la première partie comporte un premier crochet monté mobile en translation sur le capot et un premier fût fixé sur la structure fixe où le premier crochet est mobile entre alternativement une position verrouillée dans laquelle le premier crochet enserre le premier fût et une position déverrouillée dans laquelle le premier crochet n'enserre pas le premier fût, où
la deuxième partie comporte une poignée montée articulée sur le capot autour d'un axe principal de rotation et actionnable entre une position fermée et une position ouverte, un deuxième crochet monté articulé sur la poignée autour d'un axe secondaire de rotation qui est parallèle et décalé par rapport à l'axe principal de rotation et un deuxième fût fixé sur la structure fixe ou sur un autre capot symétrique dudit capot, où le deuxième crochet est mobile entre alternativement une position verrouillée dans laquelle le deuxième crochet enserre le deuxième fût et une position déverrouillée dans laquelle le deuxième crochet n'enserre pas le deuxième fût et où le deuxième crochet est monté sur la poignée de manière à ce que le passage de la position fermée à la position ouverte de la poignée entraîne le passage de la position verrouillée à la position déverrouillée du deuxième crochet et inversement, et où
le système de verrouillage comporte également un système de transmission qui est configuré pour déplacer le premier crochet de la position verrouillée à la position déverrouillée lorsque la poignée passe de la position fermée à la position ouverte et inversement où le système de transmission comporte un câble guidé le long du capot entre la première partie et la deuxième partie,
la nacelle étant caractérisée en ce que le système de transmission comprend un guignol de renvoi dont une première extrémité est montée articulée sur le capot autour d'un axe de basculement parallèle à l'axe principal de rotation, une biellette (510) montée articulée entre la poignée et le guignol de renvoi entre la première extrémité et une deuxième extrémité du guignol de renvoi et en ce que le câble est fixé à la deuxième extrémité du guignol de renvoi.

L'invention propose également une nacelle d'un moteur d'aéronef comportant une structure fixe, un capot monté articulé sur la structure fixe et un système de verrouillage du capot sur la structure fixe où le système de verrouillage comporte une première partie et une deuxième partie, où
la première partie comporte un premier crochet monté mobile en translation sur le capot et un premier fût fixé sur la structure fixe où le premier crochet est mobile entre alternativement une position verrouillée dans laquelle le premier crochet enserre le premier fût et une position déverrouillée dans laquelle le premier crochet n'enserre pas le premier fût, où
la deuxième partie comporte une poignée montée articulée sur le capot autour d'un axe principal de rotation et actionnable entre une position fermée et une position ouverte, un deuxième crochet monté articulé sur la poignée autour d'un axe secondaire de rotation qui est parallèle et décalé par rapport à l'axe principal de rotation et un deuxième fût fixé sur la structure fixe ou sur un autre capot symétrique dudit capot, où le deuxième crochet est mobile entre alternativement une position verrouillée dans laquelle le deuxième crochet enserre le deuxième fût et une position déverrouillée dans laquelle le deuxième crochet n'enserre pas le deuxième fût et où le deuxième crochet est monté sur la poignée de manière à ce que le passage de la position fermée à la position ouverte de la poignée entraîne le passage de la position verrouillée à la position déverrouillée du deuxième crochet et inversement, et où
le système de verrouillage comporte également un système de transmission qui est configuré pour déplacer le premier crochet de la position verrouillée à la position déverrouillée lorsque la poignée passe de la position fermée à la position ouverte et inversement où le système de transmission comporte un câble guidé le long du capot entre la première partie et la deuxième partie,
la nacelle étant caractérisée en ce que le système de transmission comprend une goupille montée coulissante par rapport au capot, un guignol de renvoi qui présente une première extrémité et une deuxième extrémité et qui est monté articulé entre la première extrémité et la deuxième extrémité sur le capot autour d'un axe de basculement parallèle à l'axe principal de rotation où le câble est fixé à la deuxième extrémité du guignol de renvoi, un ressort de compression fixé au capot et qui pousse contre la deuxième extrémité du guignol de renvoi de manière à tirer sur le câble, un câble de renvoi qui est fixé entre la goupille et la première extrémité du guignol de renvoi à travers une poulie de changement de direction, et en ce que la poignée présente une came qui est conformée pour repousser la goupille de la poulie lorsqu'elle est en position fermée et pour laisser la goupille se rapprocher de la poulie lorsqu'elle est en position ouverte.

De tels systèmes de verrouillage permettent de s'affranchir d'un certain nombre de charnières et d'optimiser les restantes par rapport à l'état de la technique.

Avantageusement, l'ouverture du deuxième crochet est orientée vers le haut.

Avantageusement, la première partie comporte un premier ressort de traction fixé entre le capot et le premier crochet pour contraindre le premier crochet en position verrouillée, le premier crochet comprend une encoche, le système de transmission comporte un guignol de bascule qui présente une première extrémité et une deuxième extrémité et qui est monté articulé entre la première extrémité et la deuxième extrémité sur le capot autour d'un axe de bascule où le câble est fixé à la première extrémité du guignol de bascule, la deuxième extrémité du guignol de bascule est prévue pour venir en appui contre le premier crochet lors du passage de la poignée de la position fermée vers la position ouverte, le système de verrouillage comporte un système de blocage qui présente une première biellette montée articulée par une extrémité à la première extrémité du guignol de bascule, une deuxième biellette montée articulée par une première extrémité au capot, et un deuxième ressort de traction, la deuxième extrémité de la première biellette et la deuxième extrémité de la deuxième biellette sont montées articulées l'une avec l'autre au niveau d'une articulation commune, l'articulation commune est mobile entre une position d'arrêt dans laquelle l'articulation commune se loge dans l'encoche et une position libre dans laquelle l'articulation commune n'est pas dans l'encoche, et le deuxième ressort de traction est fixé entre le capot et l'articulation commune et contraint l'articulation commune en position d'arrêt.

Avantageusement, le premier fût est monté mobile en translation sur la structure fixe, le premier fût est contraint par deux ressorts de compression disposés de part et d'autre du premier fût, et le premier fût présente une section centrale réduite par rapport à ses extrémités.

Avantageusement, la première partie est en partie haute du capot et la deuxième partie est en partie basse du capot.

L'invention propose également un aéronef comportant au moins une nacelle selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant une nacelle selon l'invention,
la Fig. 2 est une vue de face d'une nacelle équipée d'un système de verrouillage selon un premier mode de réalisation de l'invention et en position fermée,
la Fig. 3 et la Fig. 4 montrent une première partie du système de verrouillage de la Fig. 2 dans deux positions différentes,
la Fig. 5 montre une deuxième partie du système de verrouillage de la Fig. 2 dans une position ouverte,
la Fig. 6 montre la deuxième partie du système de verrouillage selon un deuxième mode de réalisation de l'invention,
la Fig. 7 montre la deuxième partie du système de verrouillage selon un autre mode de réalisation, et
la Fig. 8 est une vue en perspective d'un détail de fixation d'un fût d'accrochage.

### EXPOSE DETAILLE DE MODES DE REALISATION

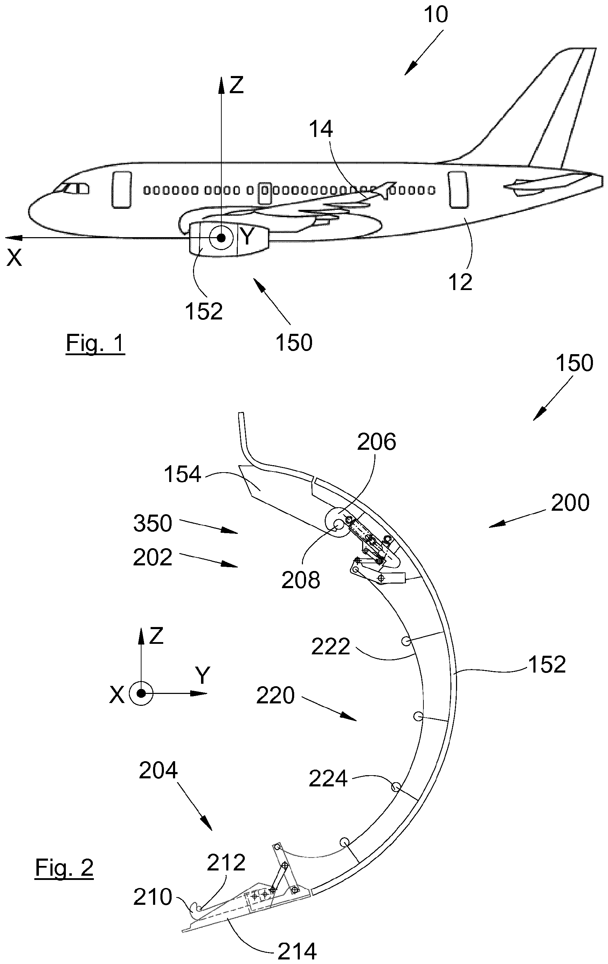

Dans la description qui suit, les termes relatifs à une position sont pris en référence à une nacelle en position d'utilisation sur un aéronef, c'est-à-dire comme représenté sur la Fig. 1.

Dans la description qui va suivre, par convention, la direction X correspond à la direction longitudinale de la turbomachine, cette direction étant parallèle à l'axe longitudinal de cette turbomachine. D'autre part, la direction Y correspond à la direction orientée transversalement par rapport à la turbomachine, et la direction Z correspond à la direction verticale ou hauteur, ces trois directions X, Y, Z étant orthogonales entre elles.

La Fig. 1 montre un aéronef 10 qui comporte un fuselage 12 de part et d'autre duquel est fixée une aile 14 sous chacune desquelles est fixé au moins un moteur, en particulier une turbomachine, entouré d'une nacelle 150.

La nacelle 150 comporte un capot 152 qui est monté articulé sur une structure fixe de la nacelle 150. Le capot 152 présente en partie haute des charnières sous forme de cols de cygne où le nombre est réduit par rapport à l'état de la technique et où au moins un col de cygne est remplacé par un système de verrouillage selon l'invention. Classiquement, la nacelle 150 comporte un capot symétrique qui est le symétrique du capot 152 par rapport à un plan de médian XZ de la nacelle 150.

La réduction du nombre de cols de cygne permet une réduction du poids, ainsi qu'une diminution de l'encombrement.

La Fig. 2 montre un premier mode de réalisation du système de verrouillage 200 qui comporte une première partie 202 en partie haute du capot 152 et une deuxième partie 204 en partie basse du capot 152. Le système de verrouillage 200 est plus particulièrement décrit dans le cadre d'un capot 152 d'une nacelle 150 d'aéronef 10, mais elle s'applique de la même manière pour tout type de capot 152 monté sur une structure fixe 154.

La première partie 202 comporte un premier crochet 206 monté mobile en translation sur le capot 152 et un premier fût 208 fixé sur la structure fixe 154 de la nacelle 150 où le premier crochet 206 est mobile entre alternativement une position verrouillée dans laquelle le premier crochet 206 enserre le premier fût 208 pour assurer le verrouillage et une position déverrouillée dans laquelle le premier crochet 206 n'enserre pas le premier fût 208 pour libérer le premier crochet 206.

La deuxième partie 204 comporte une poignée 214 montée articulée sur le capot 152 et actionnable par un technicien entre une position fermée et une position ouverte.

La deuxième partie 204 comporte également un deuxième crochet 210 monté articulé sur la poignée 214 et un deuxième fût 212 fixé sur la structure fixe 154 de la nacelle 150, où le deuxième crochet 210 est mobile entre alternativement une position verrouillée dans laquelle le deuxième crochet 210 enserre le deuxième fût 212 pour assurer le verrouillage et une position déverrouillée dans laquelle le deuxième crochet 210 n'enserre pas le deuxième fût 212 pour libérer le deuxième crochet 210.

Le deuxième fût 212 peut également être fixé sur le capot symétrique au capot 152.

Le deuxième crochet 210 est monté sur la poignée 214 de manière à ce que le passage de la position fermée à la position ouverte de la poignée 214 entraîne le passage de la position verrouillée à la position déverrouillée du deuxième crochet 210 et inversement.

Le système de verrouillage 200 comporte également un système de transmission 220, 620 qui est configuré pour déplacer le premier crochet 206 de la position verrouillée à la position déverrouillée lorsque la poignée 214 passe de la position fermée à la position ouverte et inversement.

Ainsi, l'actionnement de la poignée 214 va libérer le premier crochet 206 et le deuxième crochet 210, permettant de libérer le capot 152 qui pourra pivoter autour de ses charnières.

L'ouverture du deuxième crochet 210 est orientée vers le haut, c'est-à-dire que le deuxième crochet 210 vient enserrer le deuxième fût 212 par le dessous. Le deuxième crochet 210 est alors soumis à la pesanteur et il pend lorsqu'il n'est pas en prise avec le deuxième fût 212. Cette disposition permet de vérifier rapidement si le deuxième crochet 210 est bien en prise.

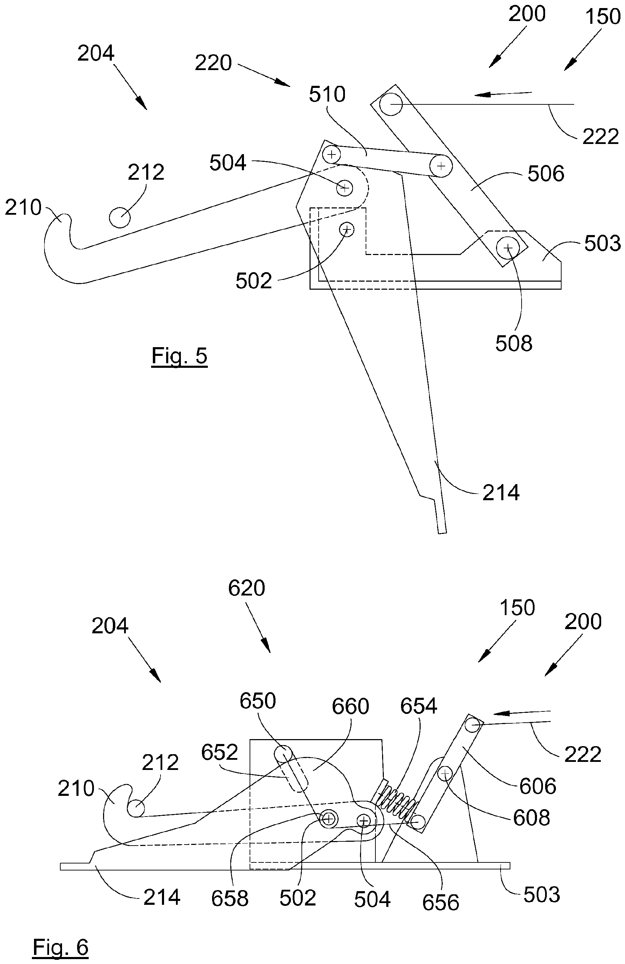

Les Figs. 5 et 6 montrent différents modes de réalisation du système de transmission 220, 620. La Fig. 5 correspond au premier mode de réalisation de la Fig. 2. La Fig. 6 correspond à un deuxième mode de réalisation.

Dans chacun des modes de réalisation, la poignée 214 est montée articulée sur un châssis 503 du capot 152 autour d'un axe principal de rotation 502 qui est ici parallèle à la direction longitudinale X.

Le deuxième crochet 210 est monté articulé sur la poignée 214 autour d'un axe secondaire de rotation 504 qui est parallèle et décalé par rapport à l'axe principal de rotation 502. Ainsi, par effet de levier, le basculement de la poignée 214 va désengager le deuxième crochet 210 du deuxième fût 212 ou inversement engager le deuxième crochet 210 contre le deuxième fût 212.

Dans chaque mode de réalisation, le système de transmission 220, 620 comporte un câble 222 qui est guidé le long du capot 152 entre la première partie 202 et la deuxième partie 204. Ici, le guidage du câble 222 est assuré par une succession de rouleaux 224 solidaires du capot 152.

Selon que le câble 222 travaille en traction ou en compression, le câble 222 sera préférentiellement un câble souple ou un câble sous gaine.

Dans le cas du premier mode de réalisation (Figs. 2, 3 et 5), le système de transmission 220 comprend également un guignol de renvoi 506 dont une première extrémité est montée articulée sur le châssis 503 autour d'un axe de basculement 508 parallèle à l'axe principal de rotation 502. Le câble 222 est fixé à une deuxième extrémité du guignol de renvoi 506.

Le système de transmission 220 comporte également une biellette 510 montée articulée entre la poignée 214 et le guignol de renvoi 506 entre la première extrémité et la deuxième extrémité.

Ainsi, le basculement de la poignée 214 de la position fermée à la position ouverte va entraîner une traction sur la biellette 510 qui va faire pivoter le guignol de renvoi 506 autour de l'axe de basculement 508 et tirer sur le câble 222. Le basculement inverse de la poignée 214 aura l'effet inverse.

Dans le cas du deuxième mode de réalisation (Fig. 6), le système de transmission 620 comprend également une goupille 650 montée coulissante par rapport au capot 152 ici dans une rainure 652 du châssis 503.

Le système de transmission 620 comprend également un guignol de renvoi 606 qui présente une première extrémité et une deuxième extrémité et qui est monté articulé entre la première extrémité et la deuxième extrémité sur le châssis 503 autour d'un axe de basculement 608 parallèle à l'axe principal de rotation 502. Le câble 222 est fixé à la deuxième extrémité du guignol de renvoi 606.

Le système de transmission 620 comprend également un ressort de compression 654 qui est fixé au châssis 503 et qui pousse contre la première extrémité du guignol de renvoi 606 de manière à tirer sur le câble 222.

Le système de transmission 620 comprend également un câble de renvoi 656 qui est fixé entre la goupille 650 et la première extrémité du guignol de renvoi 606 à travers une poulie 658 qui assure un changement de direction du câble de renvoi 656. La poulie 658 est ici coaxiale avec l'axe principal de rotation 502.

La poignée 214 présente une came 660 qui est conformée pour repousser la goupille 650 de la poulie 658 lorsqu'elle est en position fermée et pour laisser la goupille 650 se rapprocher de la poulie 658 lorsqu'elle est en position ouverte.

Ainsi, le basculement de la poignée 214 de la position fermée à la position ouverte, va entraîner un déplacement de la came 660 qui va laisser libre le déplacement de la goupille 650 vers la poulie 658 sous l'effet du ressort de compression 654 qui repousse le guignol de renvoi 606 et donc tendre le câble 222.

A l'inverse, le basculement de la poignée 214 de la position ouverte à la position fermée va entraîner la rotation de la came 660 qui va mettre en tension le câble de renvoi 656 et qui va tirer sur la première extrémité du guignol de renvoi 606 et comprimer le ressort de compression 654 tout en relâchant le câble 222.

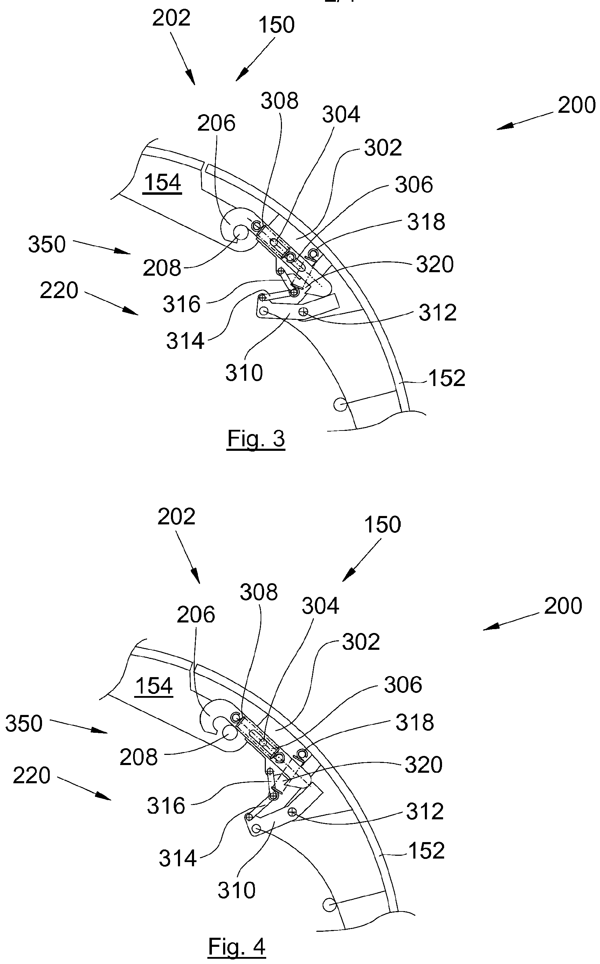

Les Figs. 2 à 4 montrent la première partie 202 dans des positions différentes. Sur la Fig. 2, le premier crochet 206 est en position verrouillée, sur la Fig. 4, le premier crochet 206 est en position déverrouillée et sur la Fig. 3, le premier crochet 206 est dans une position intermédiaire. La première partie 202 décrite ci-dessous peut être utilisée dans les deux modes de réalisation décrits ci-dessus.

Le premier crochet 206 est monté mobile en translation sur un sabot 302 du capot 152. Le guidage s'effectue ici par une rainure 306 du premier crochet 206 qui coulisse le long de deux plots 304 solidaires du sabot 302.

La première partie 202 comporte un premier ressort de traction 308 fixé entre le sabot 302, ici un plot 304 et le premier crochet 206 et qui contraint le premier crochet 206 en position verrouillée.

Le système de transmission 220, 620 comporte un guignol de bascule 310 qui présente une première extrémité et une deuxième extrémité et qui est monté articulé entre la première extrémité et la deuxième extrémité sur le sabot 302 autour d'un axe de bascule 312 où le câble 222 est fixé à la première extrémité du guignol de bascule 310. Dans le mode de réalisation de l'invention représenté sur les Figs. 2 à 4, l'axe de bascule 312 est parallèle à l'axe principal de rotation 502 mais une orientation différente est possible.

En position verrouillée du premier crochet 206 et en position fermée de la poignée 214, la deuxième extrémité du guignol de bascule 310 est à distance du premier crochet 206.

Comme cela est expliqué après, la deuxième extrémité du guignol de bascule 310 est prévue pour venir en appui contre une partie du premier crochet 206 lors du passage de la poignée 214 de la position fermée vers la position ouverte de manière à le faire passer vers la position déverrouillée.

Le système de verrouillage 200 comporte également un système de blocage 350 qui est prévu prendre une position d'arrêt dans laquelle il bloque le déplacement du premier crochet 206 en position verrouillée et une position libre dans laquelle il autorise le déplacement du premier crochet 206 de la position verrouillée à la position déverrouillée.

Le système de blocage 350 comporte une première biellette 314 montée articulée par une extrémité à la première extrémité du guignol de bascule 310.

Le système de blocage 350 comporte également une deuxième biellette 316 montée articulée par une première extrémité au sabot 302.

La deuxième extrémité de la première biellette 314 et la deuxième extrémité de la deuxième biellette 316 sont montées articulées l'une avec l'autre au niveau d'une articulation commune.

Le premier crochet 206 comprend également une encoche 320.

La première biellette 314 et la deuxième biellette 316 et donc l'articulation commune sont mobiles entre la position d'arrêt dans laquelle l'articulation commune se loge dans l'encoche 320 et bloque le déplacement du premier crochet 206 de la position verrouillée vers la position déverrouillée et la position libre dans laquelle l'articulation commune n'est pas dans l'encoche 320 et autorise le déplacement du premier crochet 206 de la position verrouillée vers la position déverrouillée.

Le système de blocage 350 comporte également un deuxième ressort de traction 318 fixé entre le sabot 302 et l'articulation commune et qui contraint l'articulation commune en position d'arrêt.

La position d'arrêt permet d'empêcher un déplacement non souhaité du premier crochet 206.

Le fonctionnement de la première partie 202 est alors le suivant.

Sur la Fig. 2, le premier crochet 206 est en position verrouillée car il est contraint par le premier ressort de traction 308 et l'articulation commune est en position d'arrêt car elle est contrainte par le deuxième ressort de traction 318. La deuxième extrémité du guignol de bascule 310 est à distance du premier crochet 206.

Lorsque la poignée 214 est actionnée de la position fermée vers la position ouverte, le système de transmission 220, 620 est actionné et le câble 222 est tiré.

Le guignol de bascule 310 bascule pour rattraper l'espace entre sa deuxième extrémité et le premier crochet 206. Durant ce déplacement, l'articulation commune se déplace de la position d'arrêt à la position libre (Fig. 3).

Le déplacement de la poignée 214 se poursuit et le câble 222 continue à être tiré. La deuxième extrémité du guignol de bascule 310 vient alors en contact contre le premier crochet 206 et le pousse pour le faire passer de la position verrouillée à la position déverrouillée (Fig. 4) où le premier crochet 206 se libère du premier fût 208.

A l'inverse, lorsque la poignée 214 passe de la position ouverte à la position fermée, le câble 222 est relâché et le premier ressort de traction 308 et le deuxième ressort de traction 318 rappellent le premier crochet 206 et l'articulation commune dans leurs positions initiales.

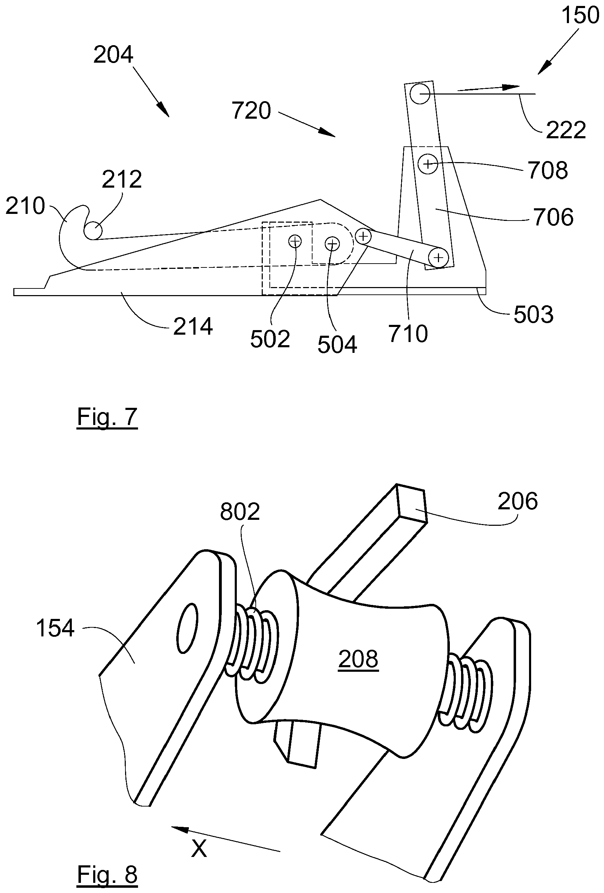

La Fig. 7 correspond à un autre mode de réalisation et le système de transmission 720 comprend également le câble 222, la poignée 214 et le deuxième crochet 210 sont montés articulés de la même manière.

Le système de transmission 720 comprend également un guignol de renvoi 706 qui présente une première extrémité et une deuxième extrémité et qui est monté articulé entre la première extrémité et la deuxième extrémité sur le châssis 503 autour d'un axe de basculement 708 parallèle à l'axe principal de rotation 502. Le câble 222 est fixé à la deuxième extrémité du guignol de renvoi 706.

Le système de transmission 720 comporte également une biellette 710 montée articulée entre la poignée 214 et la première extrémité du guignol de renvoi 706.

Ainsi, le basculement de la poignée 214 va entraîner une traction sur la biellette 710 qui va faire pivoter le guignol de renvoi 706 autour de l'axe de basculement 708 et relâcher sur le câble 222 qui, dans ce cas, travaille en compression et est alors un câble sous gaine.

Pour permettre le basculement du guignol de bascule 310 afin de déplacer le premier crochet 206, un autre guignol de renvoi peut être installé entre le câble 222 et le guignol de bascule 310.

La Fig. 8 montre un mode de réalisation particulier du premier fût 208 qui est monté mobile en translation sur la structure fixe 154 parallèlement à la direction longitudinale X. Le premier fût 208 est contraint par deux ressorts de compression 802 disposés de part et d'autre du premier fût 208. Le premier fût 208 présente une section centrale réduite par rapport à ses extrémités.

Ainsi, lorsque le premier crochet 206 vient enserrer le premier fût 208, du fait de la section centrale réduite, le premier fût va se déplacer en translation de manière à ce que le premier crochet 206 se positionne au niveau de la section centrale. Un tel agencement permet de garantir un bon positionnement du premier crochet 206 même lorsque certains éléments sont déformés.

## Revendications

1. Nacelle (150) d'un moteur d'aéronef (10) comportant une structure fixe, un capot (152) monté articulé sur la structure fixe et un système de verrouillage (200) du capot (152) sur la structure fixe (154) où le système de verrouillage (200) comporte une première partie (202) et une deuxième partie (204), où
la première partie (202) comporte un premier crochet (206) monté mobile en translation sur le capot (152) et un premier fût (208) fixé sur la structure fixe (154) où le premier crochet (206) est mobile entre alternativement une position verrouillée dans laquelle le premier crochet (206) enserre le premier fût (208) et une position déverrouillée dans laquelle le premier crochet (206) n'enserre pas le premier fût (208), où
la deuxième partie (204) comporte une poignée (214) montée articulée sur le capot (152) autour d'un axe principal de rotation (502) et actionnable entre une position fermée et une position ouverte, un deuxième crochet (210) monté articulé sur la poignée (214) autour d'un axe secondaire de rotation (504) qui est parallèle et décalé par rapport à l'axe principal de rotation (502) et un deuxième fût (212) fixé sur la structure fixe (154) ou sur un autre capot symétrique dudit capot (152), où le deuxième crochet (210) est mobile entre alternativement une position verrouillée dans laquelle le deuxième crochet (210) enserre le deuxième fût (212) et une position déverrouillée dans laquelle le deuxième crochet (210) n'enserre pas le deuxième fût (212) et où le deuxième crochet (210) est monté sur la poignée (214) de manière à ce que le passage de la position fermée à la position ouverte de la poignée (214) entraîne le passage de la position verrouillée à la position déverrouillée du deuxième crochet (210) et inversement, et où
le système de verrouillage (200) comporte également un système de transmission (220) qui est configuré pour déplacer le premier crochet (206) de la position verrouillée à la position déverrouillée lorsque la poignée (214) passe de la position fermée à la position ouverte et inversement où le système de transmission (220) comporte un câble (222) guidé le long du capot (152) entre la première partie (202) et la deuxième partie (204),
la nacelle (150) étant **caractérisée en ce que** le système de transmission (220) comprend un guignol de renvoi (506) dont une première extrémité est montée articulée sur le capot (152) autour d'un axe de basculement (508) parallèle à l'axe principal de rotation (502), une biellette (510) montée articulée entre la poignée (214) et le guignol de renvoi (506) entre la première extrémité et une deuxième extrémité du guignol de renvoi (506) et **en ce que** le câble (222) est fixé à la deuxième extrémité du guignol de renvoi (506).

2. Nacelle (150) d'un moteur d'aéronef (10) comportant une structure fixe, un capot (152) monté articulé sur la structure fixe et un système de verrouillage (200) du capot (152) sur la structure fixe (154) où le système de verrouillage (200) comporte une première partie (202) et une deuxième partie (204), où
la première partie (202) comporte un premier crochet (206) monté mobile en translation sur le capot (152) et un premier fût (208) fixé sur la structure fixe (154) où le premier crochet (206) est mobile entre alternativement une position verrouillée dans laquelle le premier crochet (206) enserre le premier fût (208) et une position déverrouillée dans laquelle le premier crochet (206) n'enserre pas le premier fût (208), où
la deuxième partie (204) comporte une poignée (214) montée articulée sur le capot (152) autour d'un axe principal de rotation (502) et actionnable entre une position fermée et une position ouverte, un deuxième crochet (210) monté articulé sur la poignée (214) autour d'un axe secondaire de rotation (504) qui est parallèle et décalé par rapport à l'axe principal de rotation (502) et un deuxième fût (212) fixé sur la structure fixe (154) ou sur un autre capot symétrique dudit capot (152), où le deuxième crochet (210) est mobile entre alternativement une position verrouillée dans laquelle le deuxième crochet (210) enserre le deuxième fût (212) et une position déverrouillée dans laquelle le deuxième crochet (210) n'enserre pas le deuxième fût (212) et où le deuxième crochet (210) est monté sur la poignée (214) de manière à ce que le passage de la position fermée à la position ouverte de la poignée (214) entraîne le passage de la position verrouillée à la position déverrouillée du deuxième crochet (210) et inversement, et où
le système de verrouillage (200) comporte également un système de transmission (220) qui est configuré pour déplacer le premier crochet (206) de la position verrouillée à la position déverrouillée lorsque la poignée (214) passe de la position fermée à la position ouverte et inversement où le système de transmission (220) comporte un câble (222) guidé le long du capot (152) entre la première partie (202) et la deuxième partie (204),
la nacelle (150) étant **caractérisée en ce que** le système de transmission (620) comprend une goupille (650) montée coulissante par rapport au capot (152), un guignol de renvoi (606) qui présente une première extrémité et une deuxième extrémité et qui est monté articulé entre la première extrémité et la deuxième extrémité sur le capot (152) autour d'un axe de basculement (608) parallèle à l'axe principal de rotation (502) où le câble (222) est fixé à la deuxième extrémité du guignol de renvoi (606), un ressort de compression (654) fixé au capot (152) et qui pousse contre la deuxième extrémité du guignol de renvoi (606) de manière à tirer sur le câble (222), un câble de renvoi (656) qui est fixé entre la goupille (650) et la première extrémité du guignol de renvoi (606) à travers une poulie (658) de changement de direction, et **en ce que** la poignée (214) présente une came (660) qui est conformée pour repousser la goupille (650) de la poulie (658) lorsqu'elle est en position fermée et pour laisser la goupille (650) se rapprocher de la poulie (658) lorsqu'elle est en position ouverte.

3. Nacelle (150) selon l'une des revendications 1 ou 2, **caractérisée en ce que** l'ouverture du deuxième crochet (210) est orientée vers le haut.

4. Nacelle (150) selon l'une des revendications 1 à 3, **caractérisée en ce que** la première partie (202) comporte un premier ressort de traction (308) fixé entre le capot (152) et le premier crochet (206) pour contraindre le premier crochet (206) en position verrouillée, **en ce que** le premier crochet (206) comprend une encoche (320), **en ce que** le système de transmission (220, 620) comporte un guignol de bascule (310) qui présente une première extrémité et une deuxième extrémité et qui est monté articulé entre la première extrémité et la deuxième extrémité sur le capot (152) autour d'un axe de bascule (312) où le câble (222) est fixé à la première extrémité du guignol de bascule (310), **en ce que** la deuxième extrémité du guignol de bascule (310) est prévue pour venir en appui contre le premier crochet (206) lors du passage de la poignée (214) de la position fermée vers la position ouverte, **en ce que** le système de verrouillage (200) comporte un système de blocage (350) qui présente une première biellette (314) montée articulée par une extrémité à la première extrémité du guignol de bascule (310), une deuxième biellette (316) montée articulée par une première extrémité au capot (152), et un deuxième ressort de traction (318), **en ce que** la deuxième extrémité de la première biellette (314) et la deuxième extrémité de la deuxième biellette (316) sont montées articulées l'une avec l'autre au niveau d'une articulation commune, **en ce que** l'articulation commune est mobile entre une position d'arrêt dans laquelle l'articulation commune se loge dans l'encoche (320) et une position libre dans laquelle l'articulation commune n'est pas dans l'encoche (320), et **en ce que** le deuxième ressort de traction (318) est fixé entre le capot (152) et l'articulation commune et contraint l'articulation commune en position d'arrêt.

5. Nacelle (150) selon l'une des revendications précédentes, **caractérisée en ce que** le premier fût (208) est monté mobile en translation sur la structure fixe (154), **en ce que** le premier fût (208) est contraint par deux ressorts de compression (802) disposés de part et d'autre du premier fût (208), et **en ce que** le premier fût (208) présente une section centrale réduite par rapport à ses extrémités.

6. Nacelle (150) selon l'une des revendications précédentes, **caractérisée en ce que** la première partie (202) est en partie haute du capot (152) et la deuxième partie (204) est en partie basse du capot (152).

7. Aéronef (10) comportant au moins une nacelle (150) selon l'une des revendications précédentes.
